# EUROPEAN PATENT SPECIFICATION

(11) **EP 1 493 330 B1**
(45) Date of publication and mention of the grant of the patent: **23.12.2009**
(21) Application number: 03254151.8
(22) Date of filing: 30.06.2003
(51) Int. Cl.: A01K 1/00, E04B 1/35

(54) **Agricultural building**
Landwirtschaftliches Gebäude
Bâtiment agricole

(30) Priority: 29.06.2002 GB 2151215
(43) Date of publication of application: 05.01.2005
(73) Proprietor: Simpson & Allinson Limited, Co Durham DL12 8EH (GB)
(72) Inventor: Allinson, John, Co Durham DL12 8EH (GB); Simpson, Geoffrey, Co Durham DL12 8EH (GB)
(74) Representative: Wood, Graham

(56) References cited:
- GB-A- 401 964
- US-A- 2 704 995
- US-A- 3 919 976
- US-A- 4 676 045
- US-A1- 2002 056 247
- PATENT ABSTRACTS OF JAPAN vol. 1999, no. 01, 29 January 1999 (1999-01-29) & JP 10 262479 A (MATSUOKA NORIHISA), 6 October 1998 (1998-10-06)

## Description

This invention relates to a building such as an agricultural building, and more particularly to agricultural buildings adapted to house livestock, in particular cattle and other commercially farmed animals, and/or for use as bulk storage for loose materials such as cereal crops and the like.

One such building, with the features of the preamble of claim 1, is known from document US 3 919 976 A.

Although the following description is provided with almost exclusive reference to the housing of cattle within agricultural buildings, those skilled in the art will appreciate that the nature and type of the animal which is to be housed inside the buildings hereinafter described is irrelevant as far as the scope of the invention is concerned, and indeed the shape and configuration of the buildings is ideally suited to the housing of any animal which requires feeding at regular intervals and which are usually grouped together in conventional intensive farming practices such as pigs, sheep and the like. Moreover, the building in accordance with the invention may be used for purposes other than the housing of animals as will become apparent.

Currently, agricultural buildings, and particularly those adapted to house large numbers of cattle or other farm equipment are traditionally erected in the manner of rectangular floor plan warehouses. As these types of buildings are rarely required to provide anything other than shelter for the animals, relatively simple construction techniques are employed to minimise the costs of erection. Specifically, the buildings are erected around a rectangular floor footprint, and the structural weight is borne and rigidity provided by a plurality of vertically orientated stanchions having their feet embedded in concrete foundations and arranged along both of the longer sides of the building. The spacing of the stanchions may be determined by engineering constraints, the nature of the wall cladding, roof cladding and other structural considerations, but in general pairs of stanchions are provided on either side of the intended rectangular floor of the building, and there may be two or more pairs equidistantly spaced apart along the longer sides of the said rectangular floor.

Pairs of rafters are securely bolted in known manner to the free upper ends of the stanchions in upwardly inclined fashion so as to ultimately define the pitch of the roof of the building, and each of the rafters in a particular pair is then bolted together at the ends remote from the stanchion upper ends to define the vertex of the roof of the building. Thereafter, a series of purlins are secured to the rafters, said purlins being parallel to the longer edges of the rectangular floor and perpendicular to the rafters so that panels of roof cladding material may be secured between or atop the purlins and also to the rafters themselves, if necessary. The panels of roof cladding material may be simple corrugated sheet steel, fibre cement or aluminium, or alternatively some of the roof panels may be of a translucent plastics material to allow some light into the interior of the constructed building during daylight.

The walls of the building may either consist of panels of wall cladding material, such as wood, corrugated sheet steel or the like which are secured between the stanchions on either of the longer sides of the building, or alternatively the walls may be of conventional brick construction if the building is required to be of enhanced structural rigidity and substance. In certain instances, the walls constructions may be a combination of both cladding material panels and of brick or block work.

The building is usually completed by providing end structures which may be constructed in a variety of different ways. For example, in smaller buildings, it is possible to provide unitary end sections, including swing or slide doors to permit access through said end structures, or alternatively, further stanchions of differing lengths depending on the distance from the floor of the building to the end pair of rafters vertically above, may be erected in foundations along the shorter sides of the building, and in such cases the ends may be completed in similar fashion to the walls of the building as described above. In any event, the construction will provide some means of access to the building, typically in the ends of the building.

Internally of the completed building, a level, flat concrete floor is commonly laid, and it is common in agricultural buildings of the type with which this invention is concerned to construct a number of metal or masonry divisions which segregate areas of the interior floor space into pens in which a predetermined number of cattle are intended to be held. It is also conventional in such buildings to provide one or more central aisles between the pens defined on either side of said aisles, and the configuration of the pens is such that the heads and necks of cattle are permitted to pass through the sides of the pen adjacent said aisles for the purpose of permitting the cattle to feed. In this regard, the floor of the central aisles adjacent the pen edges may be covered with a predetermined amount of animal feed which is sufficient for all the animals held in a particular pen. The nature of the pen layout and the central aisles which separate the pens arranged along either of the longer sides of the building is such that a farmer can travel in a straight line down the building continuously dropping feed adjacent the pen edges very conveniently, and this is common in intensive farming practices.

Notwithstanding the simplicity of the building construction described above, the costs of erecting such buildings in the UK are extremely high, not least because of the stringent safety requirements statutorily enforced during the construction. From the above it may be appreciated that the roof construction is particularly hazardous, especially when it is considered that the connection and bolting of the rafters together, the laying and securing of the purlins and the fastening of the roof cladding material to the roof may be conducted manually, and although in many instances commercial lifting equipment is used, the potential for human injury nevertheless remains high. Accordingly, to preclude any persons from falling from the roof during these procedures, it is necessary to erect a net system immediately beneath the frame of the building with edge protection above and it is this requirement which substantially increases the overall cost.

A further disadvantage of such buildings is their inconsistent ventilation characteristics, which results in stagnant and odorous atmospheres within the building. Of course, it is possible to open the doors of the building to allow air into the structure, but this creates irregularities and there is little facility for permitting a steady, controlled and continuous ventilation of such structures without incorporating mechanisation into the system. Indeed, it has for some time now been known that the ventilation of agricultural buildings has a direct effect on the wellbeing and ability of the animals housed within the building, and in cases where the ventilation within a building is good, animals tend to grow more expediently and also tend to digest their feed more efficiently, thus resulting in quicker fattening process.

DE20021101U1 in the name of Langhoff describes an agricultural building for housing animals, particularly horses, in which the stalls for the horses, the access areas for each of the stalls, and storage space associated with each of the stalls are arranged concentrically within a polygonally shaped structure. More specifically, the building described has a polygonal structure which in plan is divided into at least three concentric areas. The outer area adjacent the walls of the building is used as storage space, e.g. for animal feed, the intermediate area includes at least one animal stall, and the inner area contains access for the stalls.

It is an object of this invention to provide an agricultural building which provides further advantages over both the conventional rectangular buildings, and the identified German Utlity model document.

According to the invention there is provided an agricultural building, said building having a circular or polygonal shape in plan and having a number of perimeter stanchions vertically orientated and passing between the roof and ground at spaced intervals at or adjacent to the periphery of the roof of the building, said roof of a substantially conical or frustoconical form supported by and/or attached to beams depending radially from the centre of the roof, at least part of the side walls of the building are open or openable to allow the passage of air into the building, through the building and the roof includes at least one opening to allow the passage of air therethrough, said building includes a central area and characterised in that a substantially centrally mounted kingpost is provided on which at least one handling means is mounted to rotate around the kingpost to aid the movement of livestock in the central area.

In one embodiment the king post is longer than the stanchions and from which kingpost the said beams depend to support the roof.

In one embodiment the panels are arranged so that in plan the roof shape is either of circular or polygonal shape and the floor can be the same or the other of circular or polygonal. The building can further comprise a plurality of wall structures arranged and secured between the adjacent stanchions.

In one embodiment, the building includes a series of king posts at the centre of the building. The king posts are longer than the perimeter stanchions and together support the roof which is one of:
- secured to
- suspended from
- mounted atop
said stanchions to complete the building.

Typically one or more of the wall structures is provided with selectively openable means.

Preferably the roof structure includes at least one opening at or proximate the vertex thereof in order that ventilating air can enter the building through the opening in said one or more of the wall structures and flow to exit through the opening in the vertex of the roof.

In one embodiment, the roof is comprised of a plurality of rafters or beams secured to the free end of the perimeter stanchions and upwardly inclined to provide said roof with a predetermined degree of pitch, said rafters being orientated to approach one another and be joined together and to the central stanchions in the region of the vertex of said roof.

In one embodiment, the roof is constructed primarily of canvas or like fabric material and of unitary or sectional construction, preferably of sectional construction, enabling each portion to be attached into position between the adjacent roof beams and the peripheral edge.

In one particularly preferred embodiment, the building is completed by attaching the roof material to the structure at or proximate ground level and subsequently raising both the roof and building structure attached thereto.

Typically the lifting motion is achieved by powered movement of the ends of the roof beams mounted on a frame adjacent the kingpost or central stanchions upwardly with respect to the kingpost. Prior to the movement the stanchions are attached at or near the opposing ends of some or all of the roof beams and lie flat, substantially in line with the roof beams. As the upward movement occurs the frame at the kingpost moves upwardly and is guided by the kingpost and the stanchions move from the plane substantially in line with said beams to a position substantially perpendicular to the beams in the erected position. Once the frame is fully lifted various locking procedures can be performed to lock the stanchions in position with the beams.

Most preferably, each of the wall structures is provided with selectively openable means, and it is further preferable that the opening in the roof is provided so as to substantially coincide with the vertex thereof.

In one embodiment, for use with livestock, the interior space of the building is provided with a plurality of divisions to define a series of substantially triangular or trapezoidal penning or stall areas which are adapted to receive a predetermined number of livestock.

Typically the divisions are arranged so as to enter into a central common area within the building. From that area the cattle can pass into a race extending from said central area to the perimeter of the building, or alternatively, into a handling area within the building.

Trough feeding means can be provided at locations to suit the requirements for the livestock kept in the building. For example, with cattle, trough feeding means are provided adjacent the outer perimeter of the stall areas, either on the inside of the building or to the outside, said troughs configured around said perimeter to permit the head and optionally the neck of the livestock to pass therethrough and approach said trough means for the purposes of feeding. In the case where the trough means are disposed to the outside of the building, there may be additionally provided feed bars disposed above the trough means over which cattle may feed. In another example, for sheep, the trough feeding means can be located radially, positioned between the centre of the building and the perimeter of the building.

In one embodiment the building, when erected is provided with a canopy or an overhang at the eaves thereof, and preferably this overhang is approximately 1.5m wide.

The reader will understand that the shape and configuration of the building allows an airflow inside the building and thus the ventilation characteristics of the building are improved significantly over the conventional structures. Furthermore, the degree to which the building is ventilated can be chosen by the farmer, depending on ambient conditions, by the selective opening and closing of parts of the wall structure. This is a feature which is heretofore unprecedented in buildings of this type.

A further advantage of the invention is the excellent use of internal space which is achieved by nature of the trapezoidally shaped pens or stalls defined by the divisions, typically fitted to the floor of the building after erection.

When used for storing granular materials the materials are prefereably introduced into the interior of the building and onto the floor of the building at the centre of the building. This can be via an opening in the roof of the building or the material can be conveyed to the centre of the building within the same. The introduction into the interior of the building then allows the material to spread out around 360 degrees of the building in a substantially even manner, thereby ensuring that when there is a need to remove the material, access can be made to the material via the side walls of the building. If required constructions such as partitioning or the like can be included in the building to aid the flow of the material.

In a further aspect of the invention there is provided a method of forming an agricultural building, polygonal; or circular in plan, said building having a roof, and a wall structure around the periphery of the roof, at least part of which is open or openable, said wall structure including a series of spaced stanchions which serve to support the roof, said roof supported by at least one kingpost located at the centre of the building, said roof being conical or frustoconical in shape and formed by a series of beams depending radially from the said at least one kingpost towards the said stanchions, the building is movable to an erected condition from a substantially flattened condition by erecting the at least one kingpost, connecting first ends of the beams to the kingpost, connecting the second ends of at least some of the beams to a stanchion in a pivotable manner and said beams and stanchions positioned substantially in line adjacent the ground and then moving the first ends of the beams upwardly with respect to the at least one kingpost to the required height, whereupon, the stanchions, having pivoted to a substantially vertical plane during movement of the beams, are secured to the ground, with the kingpost being longer than the stanchions and characterised in that at least one livestock handling means is mounted on the kingpost to be rotatable thereabout in order to aid the handling of livestock within the central area of the building. In one embodiment the roofing sheet material is attached in portions, each portion connected to adjacent roof beams, prior to erection.

A specific embodiment of the invention will now be described by way of example with reference to the following figures wherein:-
Figure 1a shows an isometric schematic view of a building according to the invention with roof material in place;
Figure 1b shows the view of Figure 1a with the roof material removed for illustration;
Figure 2 shows a schematic plan view of the building from inside and demonstrates one possible arrangement of the pens or stalls which may be defined on the floor of the building,
Figure 3 shows a schematic sectional view of the building,
Figure 4 shows a further schematic plan view of the roof of the building according to one of the particular embodiments of the invention, and
Figure 5 shows a perspective view of a building according to a further embodiment of the invention in which the divisions on the building floor are clearly shown.

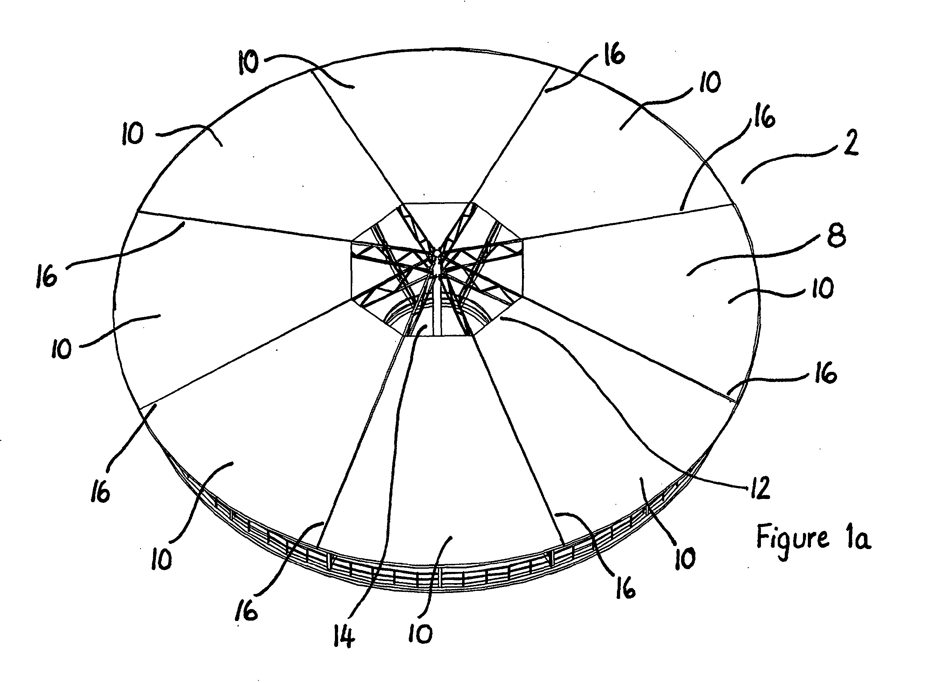

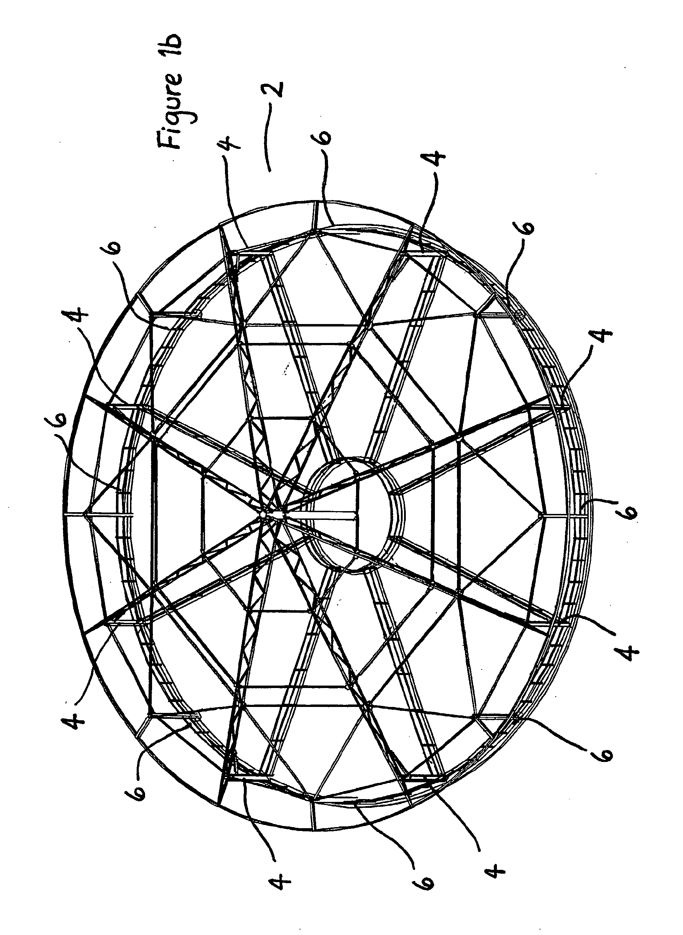

Referring firstly to Figures 1a and 1b, there is shown an agricultural building 2 which has a round roof and a generally round floor. The building consists of a plurality of perimeter stanchions 4 spaced around the periphery of the building and between which there are provided a plurality of wall panels 6 which are secured to the stanchion on either side of said panels 6 and supported thereby. The building has a roof generally indicated 8 which consists of a plurality of substantially triangularly shaped panels 10 joined to adjacent roof beams 16 edges and being arranged consecutively one next to the other so as to define a circular shape. It is to be noticed that the triangular panels 10 have truncated vertices 12 which define an opening 14 into the interior of the building and through which air within the building can exit in the manner of a chimney-type effect.

Furthermore, it is to be noted from this figure that the walls 6 are provided as gate sections but can be provided with selectively openable means which may be in the form of a sliding shutter, or rotating door or the like, and it is the intention of the invention that these selectively openable means may be open as required by the farmer either to allow for increased ventilation and air movement within the building, or alternatively and/or additionally to permit animals housed in stalls within the building to feed around the perimeter edge of the building through said selectively openable means.

Alternatively or additionally the wall panels 6 may be selectively openable and provided with a component in the form of a grille or barrier which in itself may be selectively openable or removable and through which the animals may feed.

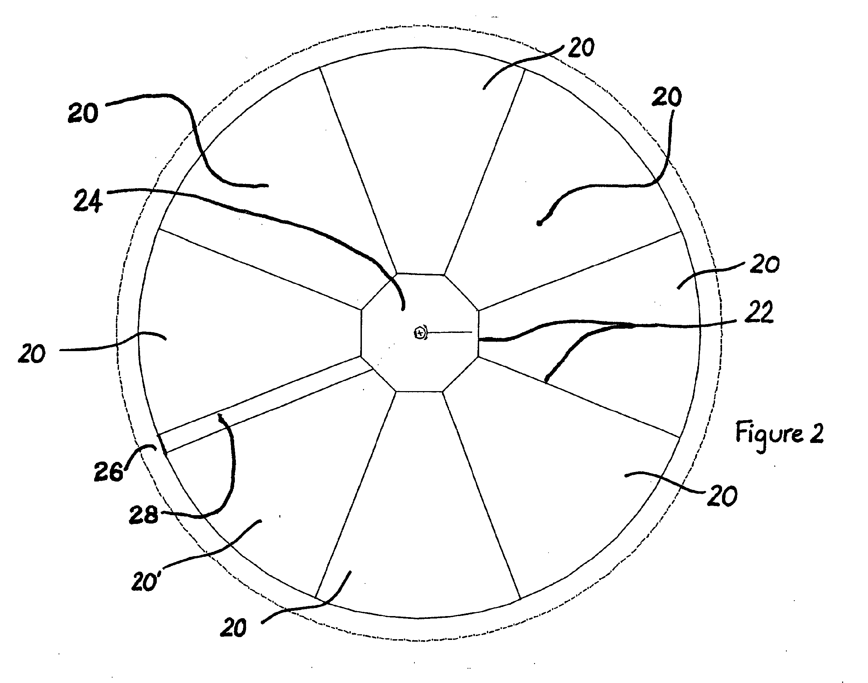

Referring now to Figure 2, a possible interior floor plan of the building 2 is demonstrated, and it can be seen that the floor is divided into a plurality of trapezoidally shaped stalls 20 which are arranged adjacent one another and defined within stall sections 22 which are bolted or otherwise secured to the floor of the building. The stall sections 22 are further arranged so as to define a central space 24 within the centre of the building, and this central area 24 may be seen as a distribution, or collection, area for cattle entering the building from the perimeter 26, passing along a cattle race 28 and emerging at the interior end of said cattle race into said central area 24, whereupon said cattle may be distributed into the various surrounding stalls 20. In addition the central area 24 can be used as a collecting area for cattle leaving the stall areas when opened. From this collecting area the cattle can either leave the building via a race or pass into a further handling area 20' in the building or into the stalls. Although not specifically represented in the figures, it will be appreciated by the reader that the stall sections 22, at least where they define the central region 24, may be provided with a gate or door or the like which can be opened to allow the entry and exit of cattle to the stall 20, and closed to prevent the escape of cattle from said stalls. Cattle screening and the like may also be incorporated into the stall dividers 22. The broken line 38 indicates the periphery of the roof and indicates that the same overhangs the floor.

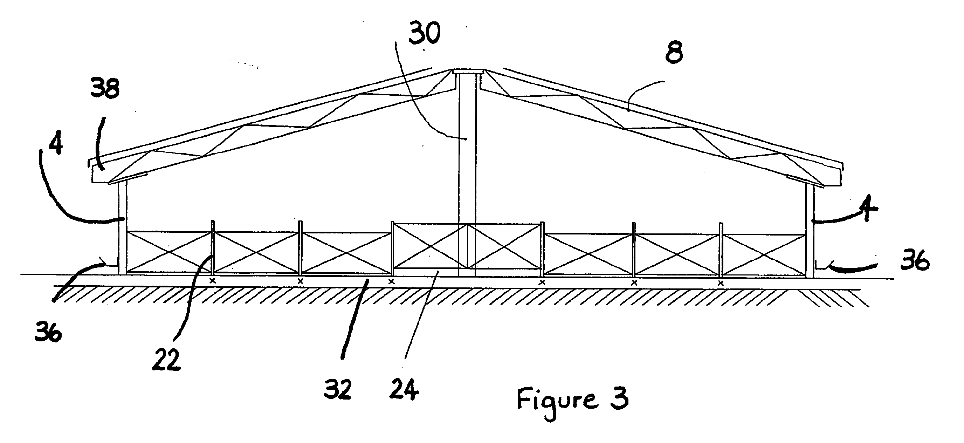

Referring now to Figure 3, there is shown a schematic sectional view of the building, and it can be seen from this figure that a central king post 30 may be employed to act as a support for the roof structure 8, which in this drawing is shown as a lightweight steel frame, which nevertheless may be hoisted vertically along the kingpost as a unitary structure during the construction of the building and secured atop the king post 30, and the perimeter stanchions 4 move to the vertical position shown. It can also be seen from this figure that the central area 24 of the building is defined peripherally of the king post 30 and around its perimeter by the stall sections 22 which are bolted to the floor 32 as required.

To the exterior of the building, there may be provided trough means 36 into which a farmer may deposit feed or other like comestibles for consumption by the animals housed within the stalls 20 when the selectively openable means 16 in the wall panel 6 is open adjacent one or more of the particular stalls. When this occurs, animals housed within the stall can lean outwardly of the building and reach into the trough in which the feed is deposited. It is important to note that the concept of providing feed troughs 36 on the exterior of the building, or at least adjacent the side of the stalls 20 which is more proximate the exterior walls of the building is generally new, and certainly in the case of a polygonal building having more than four sides such as is shown in the figures, this positioning of the feed troughs 36 represents the most effective means of feeding animals housed within the stalls 20, as this side of the stalls is necessarily the longest side, and therefore permits the simultaneous feeding of the greatest number of animals. It is also to be pointed out that in the case where the feeding troughs 36 are disposed to the exterior of the wall panels 6 of the building, the slight overhang 38 of the roof is preferable so as to provide some albeit limited cover for the feeding troughs 36.

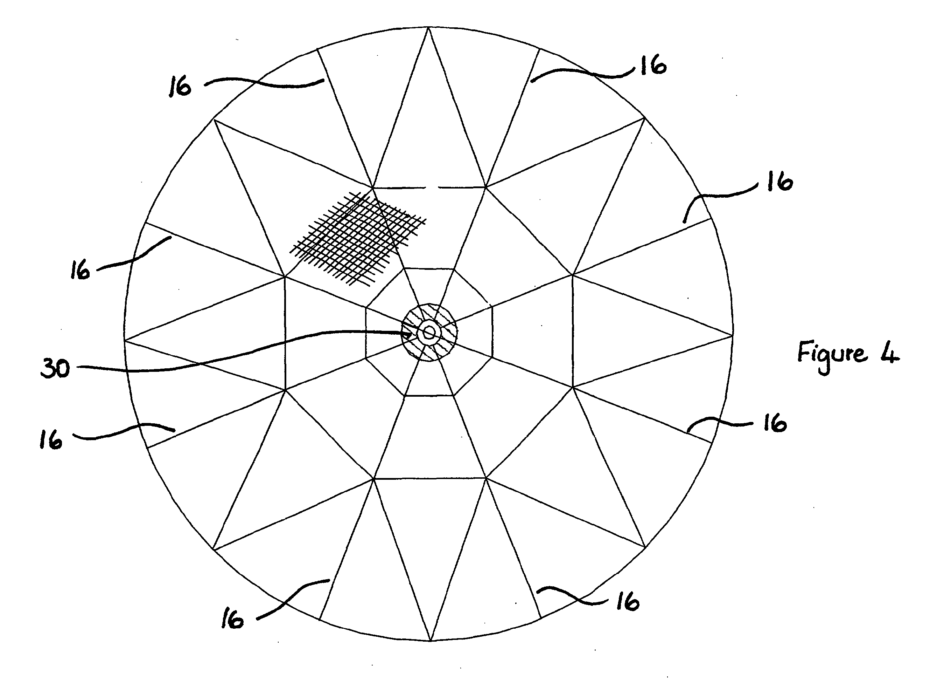

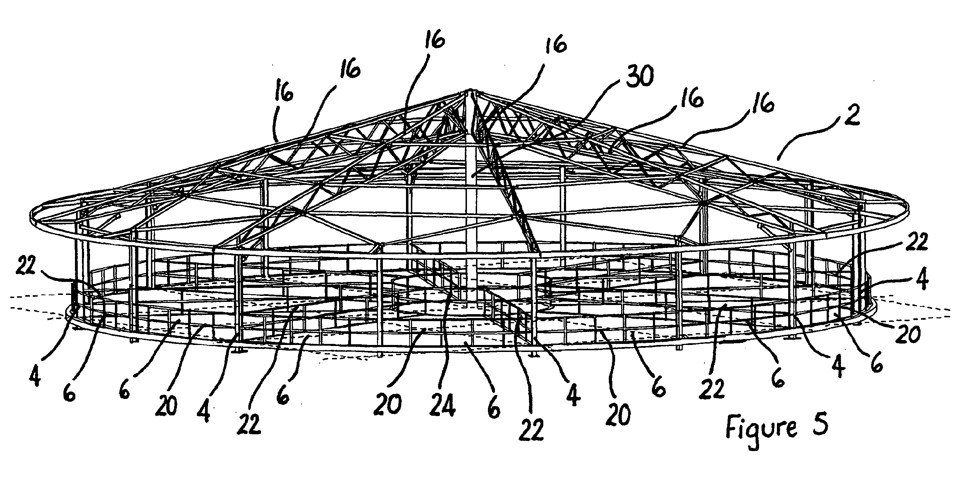

In Figure 4 there is shown a proposed roof structure construction wherein the roof 8 consists of a plurality of triangular panels of canvas material which may be hoisted into place atop the king post 30. It is proposed that the fabric from which such a roof construction may be manufactured may be a canvas type material mounted in rails provided on the beams, and that the supporting structure underneath (or above, in the case where the roof is suspended) may comprise a series of lightweight beams 16 secured between the perimeter stanchions and the king post 30 as hereinbefore described. In addition a series of support struts are provided as required between the adjacent beams. To erect the same the first ends of the beams are mounted on a support on the king post and movable in relation thereto. The support can then be hydraulically powered up the king post to the raised position shown in Figure 5.

Figure 5 illustrates a perspective view of the structure 2 in accordance with the invention and illustrates the components as herein described and how they interact when under the roof material (not shown). If the building is to be used for storage of materials rather than animals some, or all, of the divisions 22 can be removed, and the wall structure made more substantial.

If required, and not shown, handling gates can be mounted in the central area 24 to allow the livestock to be moved into and out of the central area 24 with minimal risk of injuring the handlers. In one embodiment the gates can be mounted to rotate around the kingpin.

It will therefore be appreciated that the current invention represents a significant advance in the provision, construction and use of agricultural buildings.

## Claims

1. An agricultural building (2), said building having a circular or polygonal shape in plan and having a number of perimeter stanchions (4) vertically orientated and passing between the roof and ground at spaced intervals at or adjacent to the periphery of the roof (8) of the building, said roof of a substantially conical or frustoconical form supported by and/or attached to beams (16) depending radially from the centre of the roof, at least part of the side walls of the building are open or openable to allow the passage of air into the building, through the building and the roof includes at least one opening (14) to allow the passage of air therethrough, said building includes a central area (24) and **characterised in that** a substantially centrally mounted kingpost (30) is provided on which at least one handling means is mounted to rotate around the kingpost to aid the movement of livestock in the central area (24).

2. A building according to claim 1 **characterised in that** the roof consists of panels (10) arranged so that in plan the roof shape is a circular or polygonal shape.

3. A building according to claim 1 **characterised in that** the building includes wall structures (6) selectively formed and secured between adjacent stanchions (4).

4. A building according to claim 1 **characterised in that** one or more of the wall structures (6) is provided with selectively openable means.

5. A building according to claim 1 **characterised in that** the roof structure (8) includes an opening (14) at or proximate the vertex thereof in order that ventilating air can enter the building through the opening (14) in said one or more of the wall structures (6) and flow to exit through the opening (14) in the vertex of the roof.

6. A building structure according to claim 1 **characterised in that** the roof (8) is supported by a plurality of beams (16) secured to the free end of the perimeter stanchions (4) and upwardly inclined to provide said roof (8) with a predetermined degree of pitch, said beams (16) being orientated to approach one another and be joined together and to central stanchions in the region of the vertex of said roof (8).

7. A building according to claim 1 **characterised in that** the roof (8) is constructed primarily of sheet material supported by said beams (16).

8. A building according to claim 7 **characterised in that** the roof (8) is formed from one or more sections of said sheet material, each of said sections shaped so that the longitudinal edges of the sections are attachable along the adjacent roof beam (16).

9. A building according to claim 7 **characterised in that** the building is completed by attaching the sheet material of the roof (8) at or proximate ground level and subsequently raising both roof (8) and building structure attached thereto.

10. A building according to claim 1 **characterised in that** said building frame is movable from a flattened condition to an erected condition by powered movement of ends of the roof beams (16) mounted on a frame adjacent the kingpost (30) upwardly with respect to the kingpost (30).

11. A building according to claim 10 **characterised in that** as the upward movement of the frame along the kingpost (30) occurs, the stanchions (4) connected to or positioned adjacent the opposing ends of the roof beams (16) move from a plane substantially in line with said beams (16) to a position substantially perpendicular to the beams (16) in the erected position.

12. A building according to claim 1 **characterised in that** each of the wall structures (6) is provided with selectively openable means.

13. A building according to claim 1 **characterised in that** the at least one opening (14) in the roof (8) is provided so as to substantially coincide with the vertex thereof.

14. A building according to claim 1 **characterised in that** the interior space of the building is provided with a plurality of divisions (22) secured in position to define a series of substantially triangular or trapezoidal penning or stall areas (20) which are adapted to receive a predetermined number of livestock.

15. A building according to claim 14 **characterised in that** the divisions (22) are arranged so as to have an entry into the central area (24) within the building.

16. A building according to claim 15 **characterised in that** the divisions (22) are formed such that the entry into the common areas is at the apex of each division (22).

17. A building according to claim 1 **characterised in that** an exit race (28) extends from the central area (24) of the interior of the building to the perimeter of the building through which livestock can enter and leave the building.

18. A building according to claim 17 **characterised in that** the handling means comprise at least one livestock handling gate provided in the central area (24), said gate provided to rotate around the area.

19. A building according to claim 1 **characterised in that** trough feeding means are provided adjacent the outer perimeter of the penning or stall areas (20), either on the inside of the building or to the outside, said troughs configured around said perimeter to permit access by livestock held in the building.

20. A building according to claim 1 **characterised in that** the roof structure (8) includes a drainage system which has a series of drainage outlets, said outlets passing downwardly through selected ones of the said stanchions (4) to carry water from the roof structure (8).

21. A building according to claim 14 wherein livestock held in the penning or stall areas (20) within the building can selectively pass into the central area (24) from where the livestock can pass into a handling area within the building.

22. A building according to claim 1 **characterised in that** cereal grains or feed material is introduced into the interior of the building at the centre (24) and flows into the building interior, whereupon the material can be removed from the building via openings in the peripheral wall structure (6).

23. A building according to claim 22 **characterised in that** the material is introduced into the interior of the building through an opening in the roof (8).

24. A building according to claim 22 **characterised in that** the material is introduced into the interior of the building by conveying means from the exterior of the building into the centre (24) of the building for dispensing.

25. A building according to claim 22 **characterised in that** the interior of the building includes selectively positioned structures to aid the flow and separation of the material when stored in the building.

26. A building according to claim 1 **characterised in that** the kingpost (30) is longer than said stanchions (4) and the beams (16) depend therefrom to support the roof (8).

27. A method of forming an agricultural building (2), polygonal; or circular in plan, said building having a roof (8), and a wall structure around the periphery of the roof, at least part of which is open or openable, said wall structure including a series of spaced stanchions (4) which serve to support the roof, said roof supported by at least one kingpost (30) located at the centre of the building, said roof being conical or frustoconical in shape and formed by a series of beams (16) depending radially from the said at least one kingpost towards the said stanchions, the building is movable to an erected condition from a substantially flattened condition by erecting the at least one kingpost, connecting first ends of the beams to the kingpost, connecting the second ends of at least some of the beams to a stanchion in a pivotable manner and said beams and stanchions positioned substantially in line adjacent the ground and then moving the first ends of the beams upwardly with respect to the at least one kingpost, to the required height, whereupon, the stanchions, having pivoted to a substantially vertical plane during movement of the beams, are secured to the ground, with the kingpost being longer than the stanchions and **characterised in that** at least one livestock handling means is mounted on the kingpost to be rotatable thereabout in order to aid the handling of livestock within the central area (24) of the building.

## Patentansprüche

1. Landwirtschaftliches Gebäude (2), wobei das genannte Gebäude eine kreisförmige oder polygonale Grundrissgestalt hat und eine Anzahl von Umfangspfosten (4) hat, die senkrecht ausgerichtet sind und in beabstandeten Intervallen an oder neben der Peripherie des Dachs (8) des Gebäudes zwischen dem Dach und dem Boden verlaufen, wobei das genannte Dach mit einer im Wesentlichen kegeligen oder kegelstumpfförmigen Form von Trägem (16) getragen wird und/oder an solchen angebracht ist, die von der Mitte des Dachs radial abhängen, wobei die Seitenwände des Gebäudes wenigstens zum Teil offen sind oder geöffnet werden können, um Luft in das Gebäude, durch das Gebäude strömen zu lassen, und das Dach wenigstens eine Öffnung (14) aufweist, um Luft durch sie hindurchströmen zu lassen, wobei das genannte Gebäude einen zentralen Bereich (24) aufweist, und **dadurch gekennzeichnet, dass** eine im Wesentlichen zentral montierte Mittelstütze (30) bereitgestellt ist, an welcher wenigstens eine Abfertigungsvorrichtung zum Drehen um die Mittelstütze als Hilfe zum Bewegen von Tieren in dem zentralen Bereich (24) montiert ist.

2. Gebäude nach Anspruch 1, **dadurch gekennzeichnet, dass** das Dach aus Flachelementen (10) besteht, die so angeordnet sind, dass die Dachgestalt im Grundriss eine kreisförmige oder polygonale Gestalt ist.

3. Gebäude nach Anspruch 1, **dadurch gekennzeichnet, dass** das Gebäude Wandkonstruktionen (16) aufweist, die selektiv ausgebildet und zwischen benachbarten Pfosten (4) befestigt sind.

4. Gebäude nach Anspruch 1, **dadurch gekennzeichnet, dass** eine oder mehrere der Wandkonstruktionen (16) mit Mitteln versehen sind, die selektiv geöffnet werden können.

5. Gebäude nach Anspruch 1, **dadurch gekennzeichnet, dass** die Dachkonstruktion (18) eine Öffnung (14) an oder nahe an ihrem Scheitel hat, damit Lüftungsluft durch die Öffnung (14) in den genannten einen oder mehreren der Wandkonstruktionen (6) in das Gebäude einströmen und durch die Öffnung (14) in dem Scheitel des Dachs hinausströmen kann.

6. Gebäudekonstruktion nach Anspruch 1, **dadurch gekennzeichnet, dass** das Dach (18) von mehreren Trägem (16) getragen wird, die an dem freien Ende der Umfangspfosten (4) befestigt sind und nach oben geneigt sind, um das genannte Dach (8) mit einem vorbestimmten Neigungswinkel zu versehen, wobei die genannten Träger (16) so ausgerichtet sind, dass sie sich einander nähern und in der Region des Scheitels des genannten Dachs (8) miteinander und mit zentralen Stützen verbunden sind.

7. Gebäude nach Anspruch 1, **dadurch gekennzeichnet, dass** das Dach (8) hauptsächlich aus flächigem Material gebaut ist, das von den genannten Trägem (16) getragen wird.

8. Gebäude nach Anspruch 7, **dadurch gekennzeichnet, dass** das Dach (8) aus einem oder mehreren Segmenten aus dem genannten flächigen Material hergestellt ist, wobei jedes der genannten Segmente so gestaltet ist, dass die Längskanten der Segmente an dem angrenzenden Dachträger (16) entlang angebracht werden können.

9. Gebäude nach Anspruch 7, **dadurch gekennzeichnet, dass** das Gebäude fertiggestellt wird, indem das flächige Material des Dachs (8) auf oder nahe an Bodenhöhe angebracht wird und anschließend sowohl das Dach (8) als auch die daran angebrachte Gebäudekonstruktion errichtet wird.

10. Gebäude nach Anspruch 1, **dadurch gekennzeichnet, dass** der genannte Gebäuderahmen durch kraftbetriebene Bewegung von Enden der Dachträger (16), die an einem Rahmen neben der Mittelstütze (30) montiert sind, in Bezug auf die Mittelstütze (30) nach oben aus einem flach zusammengelegten Zustand in einen aufgestellten Zustand bewegbar ist.

11. Gebäude nach Anspruch 10, **dadurch gekennzeichnet, dass**, während die Aufwärtsbewegung des Rahmens an der Mittelstütze (30) entlang stattfindet, die mit den gegenüberliegenden Enden der Dachträger (16) verbundenen oder neben ihnen positionierten Pfosten (4) aus einer im Wesentlichen mit den genannten Trägem (16) fluchtenden Ebene auf eine Position bewegt werden, die im Wesentlichen lotrecht zu den Trägem (16) in der aufgestellten Position ist.

12. Gebäude nach Anspruch 1, **dadurch gekennzeichnet, dass** die Wandkonstruktionen (6) jeweils mit Vorrichtungen versehen sind, die selektiv geöffnet werden können.

13. Gebäude nach Anspruch 1, **dadurch gekennzeichnet, dass** die wenigstens eine Öffnung (14) in dem Dach (8) so bereitgestellt ist, dass sie im Wesentlichen mit seinem Scheitel übereinstimmt.

14. Gebäude nach Anspruch 1, **dadurch gekennzeichnet, dass** der Innenraum des Gebäudes mit mehreren Unterteilungen (22) versehen ist, die in Sollage befestigt sind, um eine Reihe von im Wesentlichen dreieckigen oder trapezförmigen Pferch- oder Stallbereichen (20) zu definieren, die zum Aufnehmen einer vorbestimmten Zahl von Tieren ausgeführt sind.

15. Gebäude nach Anspruch 14, **dadurch gekennzeichnet, dass** die Unterteilungen (22) so angeordnet sind, dass sie einen Eingang in den zentralen Bereich (24) in dem Gebäude haben.

16. Gebäude nach Anspruch 15, **dadurch gekennzeichnet, dass** die Unterteilungen (22) so ausgebildet sind, dass der Eingang in die gemeinsamen Bereiche sich an der Spitze jeder Unterteilung (22) befindet.

17. Gebäude nach Anspruch 1, **dadurch gekennzeichnet, dass** ein Ausgang (28) von dem zentralen Bereich (24) des Inneren des Gebäudes zum Umfang des Gebäudes verläuft, durch welchen Tiere in das Gebäude gelangen und es verlassen können.

18. Gebäude nach Anspruch 17, **dadurch gekennzeichnet, dass** die Abfertigungsvorrichtung wenigstens ein Tierabfertigungsgatter umfasst, das in dem zentralen Bereich (24) bereitgestellt ist, wobei das genannte Gatter zum Drehen um den Bereich bereitgestellt ist.

19. Gebäude nach Anspruch 1, **dadurch gekennzeichnet, dass** Trogfüttervorrichtungen neben dem äußeren Umfang der Pferch- oder Stallbereiche (20), entweder innen in oder außen an dem Gebäude, bereitgestellt sind, wobei die genannten Tröge um den genannten Umfang konfiguriert sind, um in dem Gebäude gehaltenen Tieren den Zugang zu ihnen zu ermöglichen.

20. Gebäude nach Anspruch 1, **dadurch gekennzeichnet, dass** die Dachkonstruktion (8) ein Ableitungssystem aufweist, das eine Reihe von Ableitungsauslässen hat, wobei die genannten Auslässe zum Ableiten von Wasser von der Dachkonstruktion (8) durch ausgewählte der genannten Pfosten (4) nach unten verlaufen.

21. Gebäude nach Anspruch 14, wobei in den Pferch- oder Stallbereichen (20) in dem Gebäude gehaltene Tiere selektiv in den zentralen Bereich (24) gelangen können, von wo die Tiere in einen Abfertigungsbereich in dem Gebäude gelangen können.

22. Gebäude nach Anspruch 1, **dadurch gekennzeichnet, dass** Getreidekörner oder Futtermaterial an der Mitte (24) in das Innere des Gebäudes eingeführt werden und in das Gebäudeinnere fließen, woraufhin das Material durch Öffnungen in der Peripheriewandkonstruktion (6) aus dem Gebäude entfernt werden kann.

23. Gebäude nach Anspruch 22, **dadurch gekennzeichnet, dass** das Material durch eine Öffnung in dem Dach (8) in das Innere des Gebäudes eingeführt wird.

24. Gebäude nach Anspruch 22, **dadurch gekennzeichnet, dass** das Material durch Fördermittel zum Verteilen von außerhalb des Gebäudes in die Mitte (24) des Gebäudes in das Innere des Gebäudes eingeführt wird.

25. Gebäude nach Anspruch 22, **dadurch gekennzeichnet, dass** das Innere des Gebäudes selektiv positionierte Konstruktionen zum Fördern des Flusses und der Trennung des Materials, wenn es in dem Gebäude gelagert wird, aufweist.

26. Gebäude nach Anspruch 1, **dadurch gekennzeichnet, dass** die Mittelstütze (38) länger als die genannten Pfosten (4) ist und die Träger (16) zum Tragen des Dachs (8) von ihr abhängen.

27. Verfahren zur Herstellung eines im Grundriss polygonalen oder kreisförmigen landwirtschaftlichen Gebäudes (2), wobei deas genannte Gebäude ein Dach (8) und eine Wandkonstruktion um die Peripherie des Dachs hat, die wenigstens zum Teil offen ist oder geöffnet werden kann, wobei die genannte Wandkonstruktion eine Reihe von voneinander beabstandeten Pfosten (4) aufweist, die zum Stützen des Dachs dienen, wobei das genannte Dach von wenigstens einer Mittelstütze (30) gestützt wird, die sich in der Mitte des Gebäudes befindet, wobei das genannte Dach eine im Wesentlichen kegelige oder kegelstumpfförmige Gestalt hat und von einer Reihe von Trägem (16) gebildet wird, die von der genannten wenigstens einen Mittelstütze radial in Richtung auf die genannten Pfosten abhängen, wobei das Gebäude aus einem im Wesentlichen flach zusammengelegten Zustand in einen aufgestellten Zustand bewegbar ist, indem die wenigstens eine Mittelstütze aufgerichtet wird, das erste Ende der Trägem mit der Mittelstütze verbunden wird, das zweite Ende von wenigstens einigen der Träger schwenkbar mit einem Pfosten verbunden wird und die genannten Träger und Pfosten im Wesentlichen fluchtend an den Boden angrenzend positioniert werden und dann die ersten Trägerenden in Bezug auf die wenigstens eine Mittelstütze auf die erforderliche Höhe nach oben bewegt werden, woraufhin die Pfosten, die während der Bewegung der Träger auf eine im Wesentlichen vertikale Ebene geschwenkt wurden, an dem Boden befestigt werden, wobei die Mittelstütze länger als die Pfosten ist, und **dadurch gekennzeichnet, dass** an der Mittelstütze wenigstens eine Tierabfertigungsvorrichtung montiert wird, so dass sie um diese drehbar ist, um bei der Abfertigung von Tieren in dem zentralen Bereich (24) des Gebäudes behilflich zu sein.

## Revendications

1. Bâtiment agricole (2), ledit bâtiment ayant une forme circulaire ou polygonale dans une vue en plan, et ayant un certain nombre de montants périmétriques (4) lesquels sont orientés verticalement et qui passent entre la toiture et le sol à des intervalles espacés au niveau de la périphérie de la toiture (8) du bâtiment, ou en position adjacente à cette périphérie, ladite toiture ayant une forme sensiblement conique ou frusto-conique supportée par et/ou attachée à des poutres (16) dépendantes radialement du centre de la toiture, une partie au moins des murs latéraux du bâtiment étant ouverte ou ouvrable pour permettre à l'air d'arriver dans le bâtiment et de traverser le bâtiment et la toiture comporte au moins une ouverture (14) pour permettre le passage de l'air à travers celle-ci, ledit bâtiment comprenant une zone centrale (24) et **caractérisé en ce qu'**un poinçon (30) monté sensiblement en position centrale est prévu et sur lequel au moins un moyen de maniement est monté pour tourner autour du poinçon afin de faciliter le mouvement du bétail dans la zone centrale (24).

2. Bâtiment selon la revendication 1, **caractérisé en ce que** la toiture se compose de panneaux (10) lesquels sont agencés de sorte que, dans une vue en plan, la forme de la toiture a une forme circulaire ou polygonale.

3. Bâtiment selon la revendication 1, **caractérisé en ce que** le bâtiment comporte des structures murales (6) lesquelles sont formées de façon sélective et fixées entre des montants (4) adjacents.

4. Bâtiment selon la revendication 1, **caractérisé en ce qu'**une ou plusieurs structures murales (6) est (sont) pourvue(s) de moyens ouvrables de façon sélective.

5. Bâtiment selon la revendication 1, **caractérisé en ce que** la structure de toiture (8) comporte une ouverture (14) au niveau du sommet de la toiture, ou à proximité de ce sommet, pour que l'air de ventilation puisse pénétrer dans le bâtiment à travers l'ouverture (14) ménagée dans ladite une ou lesdites plusieurs structures murales (6) et s'écoule pour sortir à travers l'ouverture (14) ménagée dans le sommet de la toiture.

6. Structure de bâtiment selon la revendication 1, **caractérisée en ce que** la toiture (8) est soutenue par une pluralité de poutres (16) fixées sur l'extrémité libre des montants périmétriques (4) et inclinées vers le haut afin de donner à ladite toiture (8) un degré de pente prédéterminé, lesdites poutres (16) étant orientées pour se rapprocher l'une de l'autre et être jointes l'une à l'autre et au niveau des montants centraux dans la zone du sommet de ladite toiture (8).

7. Bâtiment selon la revendication 1, **caractérisé en ce que** la toiture (8) est principalement construite en un matériau en feuilles soutenu par lesdites poutres (16).

8. Bâtiment selon la revendication 7, **caractérisé en ce que** la toiture (8) est formée à partir d'une ou de plusieurs sections dudit matériau en feuilles, chacune desdites sections étant façonnée de sorte que les bords longitudinaux des sections peuvent être attachés le long de la poutre (16) de toiture adjacente.

9. Bâtiment selon la revendication 7, **caractérisé en ce que** le bâtiment est achevé en attachant le matériau en feuilles de la toiture (8) au niveau du sol, ou à proximité de celui-ci, et ultérieurement en relevant à la fois la toiture (8) et la structure du bâtiment qui y est attachée.

10. Bâtiment selon la revendication 1, **caractérisé en ce que** ladite charpente du bâtiment peut être déplacée depuis un état aplati à un état érigé à l'aide d'un mouvement motorisé des extrémités des poutres (16) de la toiture montées sur une charpente en position adjacente au poinçon (30) dans le sens ascendant par rapport au poinçon (30).

11. Bâtiment selon la revendication 10, **caractérisé en ce qu'**au fur et à mesure que se produit le mouvement ascendant de la charpente le long du poinçon (30), les montants (4) raccordés aux extrémités opposées des poutres (16) de toiture, ou en position adjacente à ces extrémités, se déplacent depuis un plan sensiblement aligné avec lesdites poutres (16) vers une position sensiblement perpendiculaire aux poutres (16) dans la position érigée.

12. Bâtiment selon la revendication 1, **caractérisé en ce que** chacune des structures murales (6) est pourvue de moyens ouvrables de façon sélective.

13. Bâtiment selon la revendication 1, **caractérisé en ce que** l'au moins une ouverture (14) ménagée dans la toiture (8) est prévue de sorte à coïncider sensiblement avec le sommet de la toiture.

14. Bâtiment selon la revendication 1, **caractérisé en ce que** l'espace interne du bâtiment est doté d'une pluralité de cloisonnements (22) fixés en position afin de définir une série de zones d'enclos ou de stalles (20) sensiblement triangulaires ou trapézoïdales qui sont conçues pour recevoir un nombre prédéterminé de bétail.

15. Bâtiment selon la revendication 14, **caractérisé en ce que** les cloisonnements (22) sont agencés de sorte à comporter une entrée dans la zone centrale (24) à l'intérieur du bâtiment.

16. Bâtiment selon la revendication 15, **caractérisé en ce que** les cloisonnements (22) sont formés de sorte que l'entrée dans les zones communes se situe au niveau du sommet de chaque cloisonnement (22).

17. Bâtiment selon la revendication 1, **caractérisé en ce qu'**une voie de sortie (28) s'étend depuis la zone centrale (24) de l'intérieur du bâtiment vers le périmètre du bâtiment à travers laquelle le bétail peut entrer dans le bâtiment et en sortir.

18. Bâtiment selon la revendication 17, **caractérisé en ce que** les moyens de maniement comportent au moins une barrière de maniement du bétail ménagée dans la zone centrale (24), ladite barrière étant prévue pour tourner autour de la zone.

19. Bâtiment selon la revendication 1, **caractérisé en ce que** des moyens d'alimentation en auge sont prévus en position adjacente au périmètre extérieur des zones d'enclos ou de stalles (20), soit sur le côté interne du bâtiment soit sur le côté externe, lesdites auges étant configurées autour dudit périmètre pour permettre au bétail maintenu dans le bâtiment d'y avoir accès.

20. Bâtiment selon la revendication 1, **caractérisé en ce que** la structure de toiture (8) comporte un système de drainage qui possède une série d'orifices d'évacuation, lesdits orifices passant vers le bas à travers des montants sélectionnés parmi lesdits montants (4) afin d'acheminer l'eau à partir de la structure de toiture (8).

21. Bâtiment selon la revendication 14, le bétail maintenu dans les zones d'enclos ou de stalles (20) à l'intérieur du bâtiment pouvant passer de façon sélective dans la zone centrale (24) à partir de laquelle le bétail peut passer dans une zone de maniement à l'intérieur du bâtiment.

22. Bâtiment selon la revendication 1, **caractérisé en ce que** des graines de céréales ou des matières d'alimentation sont introduites à l'intérieur du bâtiment au niveau du centre (24) et s'écoulent dans l'espace interne du bâtiment, après quoi les matières peuvent être enlevées du bâtiment par l'intermédiaire d'ouvertures ménagées dans la structure murale (6) périphérique.

23. Bâtiment selon la revendication 22, **caractérisé en ce que** les matières sont introduites à l'intérieur du bâtiment à travers une ouverture ménagée dans la toiture (8).

24. Bâtiment selon la revendication 22, **caractérisé en ce que** les matières sont introduites à l'intérieur du bâtiment grâce à des moyens de convoyeur depuis l'extérieur du bâtiment vers le centre (24) du bâtiment à des fins de distribution.

25. Bâtiment selon la revendication 22, **caractérisé en ce que** l'intérieur du bâtiment comporte des structures positionnées de façon sélective afin de faciliter le flux et la séparation de matières quand elles sont stockées dans le bâtiment.

26. Bâtiment selon la revendication 1, **caractérisé en ce que** le poinçon (30) est plus long que lesdits montants (4) et les poutres (16) dépendent de celui-ci afin de soutenir la toiture (8).

27. Procédé servant à réaliser un bâtiment agricole (2), polygonal ou circulaire dans une vue en plan, ledit bâtiment ayant une toiture (8) et une structure murale autour de la périphérie de la toiture, dont une partie au moins est ouverte ou ouvrable, ladite structure murale comportant une série de montants (4) espacés lesquels servent à soutenir la toiture, ladite toiture étant soutenue par au moins un poinçon (30) situé au centre du bâtiment, ladite toiture ayant une forme conique ou frusto-conique et formée par une série de poutres (16) dépendantes radialement dudit au moins un poinçon vers lesdits montants, le bâtiment pouvant être déplacé vers un état érigé à partir d'un état sensiblement aplati grâce à l'opération consistant à dresser ledit au moins un poinçon, à raccorder les premières extrémités des poutres au poinçon, à raccorder les deuxièmes extrémités de certaines poutres au moins à un montant de façon pivotable alors que les poutres et les montants sont positionnés sensiblement en alignement en position adjacente au sol et ensuite à déplacer les premières extrémités des poutres suivant un sens ascendant par rapport audit au moins un poinçon jusqu'à la hauteur requise, après quoi, les montants, ayant pivoté vers un plan sensiblement vertical pendant le mouvement des poutres, sont fixés au sol, alors que le poinçon est plus long que les montants, et **caractérisé en ce qu'**au moins un moyen de maniement du bétail est monté sur le poinçon pour pouvoir tourner autour de celui-ci afin de faciliter le maniement du bétail à l'intérieur de la zone centrale (24) du bâtiment.
